# EUROPÄISCHE PATENTSCHRIFT

(11) **EP 2 649 338 B1**
(45) Veröffentlichungstag und Bekanntmachung des Hinweises auf die Patenterteilung: **03.02.2016**
(21) Anmeldenummer: 11813762.9
(22) Anmeldetag: 15.11.2011
(51) Int. Cl.: F16D 25/08, F16D 25/10, F16D 21/00

(54) **AUSRÜCKER FÜR EINE DOPPELKUPPLUNG MIT WEGSENSIERUNG**
RELEASE MECHANISM FOR A DUAL CLUTCH WITH POSITION SENSING
ORGANE DE DÉBRAYAGE POUR UN EMBRAYAGE DOUBLE COMPORTANT UNE DÉTECTION DE COURSE

(30) Priorität: 09.12.2010 DE 102010053943
(43) Veröffentlichungstag der Anmeldung: 16.10.2013
(73) Patentinhaber: Schaeffler Technologies AG & Co. KG, 91074 Herzogenaurach (DE)
(72) Erfinder: BOSNJAK, Daniel, F-67470 Seltz (FR); KRAHTOV, Luben, 76530 Baden-Baden (DE); HILD, Nicolas, 57370 Phalsbourg (FR)
(86) Internationale Anmeldenummer: PCT/DE2011/001986
(87) Internationale Veröffentlichungsnummer: WO 2012/095064

(56) Entgegenhaltungen:
- EP-A1- 1 555 452
- EP-A2- 1 878 932
- DE-A1-102009 043 758
- DE-C1- 19 953 091

## Beschreibung

Die Erfindung betrifft einen Ausrücker für eine Doppelkupplung mit Wegsensierung für ein Kraftfahrzeug mit den Merkmalen des Oberbegriffs des Anspruchs 1, wie zum Beispiel in der EP 1 555 452 offenbart ist.

In der DE 10 2009 053 488 A1 wird eine aus zwei Teilausrückern bestehende Ein-/ Ausrückeinrichtung zur Übertragung einer Kolbenkraft auf die jeweilige Teilkupplung einer Doppelkupplung beschrieben, bei der der entsprechenden Teilkupplung zugeordnete Teilausrücker aus einer Gruppe von zwei in einem gemeinsamen Gehäuseteil angeordneten und in diesem geführten Kolben gebildet wird. In der favorisierten Ausgestaltung der Erfindung sind die der ersten, motorseitigen Teilkupplung zugeordneten Kolben und die der zweiten, getriebeseitigen Teilkupplung zugeordneten Kolben auf unterschiedlichen Radien angeordnet, wobei die zu einem Teilausrücker gehörende Gruppe auf dem gleichen Radius liegt.

Allerdings kann bei dieser Ausführung der Betätigungsweg nur der Kolbengruppen erfasst werden, die dem am Umfang des Gehäuses angeordneten Sensor radial am nächsten kommt. Die Erfassung des Betätigungsweges der anderen Kolbengruppe ist allerdings auf diesem einfachen und eleganten Weg nicht möglich.

Daher besteht die Aufgabe der Erfindung darin, einen Ausrücker für eine Doppelkupplung mit Wegsensierung zu schaffen, der die zur Betätigung beider Teilkupplungen benötigten Betätigungswege der jeweiligen Kolben/Kolbengruppen erfasst, ohne dass dazu eine Vergrößerung des vorhandenen Bauraumes erforderlich ist.

Diese Aufgabe wird mit einem Ausrücker für eine Doppelkupplung mit Wegsensierung mit den Merkmalen des Anspruchs 1 gelöst. Vorteilhafte Ausgestaltungen ergeben sich aus den Unteransprüchen.

Danach besteht ein Ausrücker für eine Doppelkupplung mit Wegsensierung aus einem konzentrisch zu einer Getriebeeingangswelle angeordneten Gehäuse, in dem mindestens ein einem Teilausrücksystem zugeordneter axial bewegbarer Kolben geführt wird, der mit einer Teilkupplung der Doppelkupplung in Wirkverbindung bringbar ist. Erfindungsgemäß liegen diese Kolben radial beabstandet zur Achse der Getriebeeingangswelle auf dem gleichen Teilkreisdurchmesser und sind einem auf der Mantelfläche des Gehäuses angeordneten Sensor zugeordnet. In einer vorteilhaften Ausgestaltung der Erfindung bilden mindestens zwei gleich gestaltete Kolben mit gleicher Druckfläche eine Gruppe, wobei jeweils ein Kolben einer Gruppe mit einem Magneten versehen ist oder einen magnetisierbaren Bereich aufweist.

Dabei ist es zur Sensierung des jeweiligen Betätigungsweges des Kolbens besonders vorteilhaft, dass jeweils der einen Magneten oder einen magnetisierbaren Bereich aufweisende Kolben einer Gruppe mit dem entsprechend zugeordneten Sensor in Wirkverbindung steht.

Eine weitere vorteilhafte Ausgestaltung des Ausrückers sieht vor, dass die Kolben im Querschnitt eine an das ringförmige Gehäuse angepasste Form aufweisen. Als besonders platzsparend hat sich dabei eine nierenförmige Form erwiesen.

Weiter ist es zur Verteilung der Ausrückkraft vorteilhaft, dass im Gehäuse die zu einer Gruppe gehörenden Kolben gegenüber liegend angeordnet sind und deren Querschnittsflächen nahezu gleich groß sind.

Die Erfindung wird nachfolgend anhand eines Ausführungsbeispiel und zugehöriger Zeichnungen näher erläutert.

Es zeigen:
- Figur 1: eine perspektivische Darstellung eines Ausrückers für eine Doppelkupplung im Schnitt:
- Figur 2: eine Draufsicht auf den Ausrücker aus Figur 1 ohne Ausrücklager.

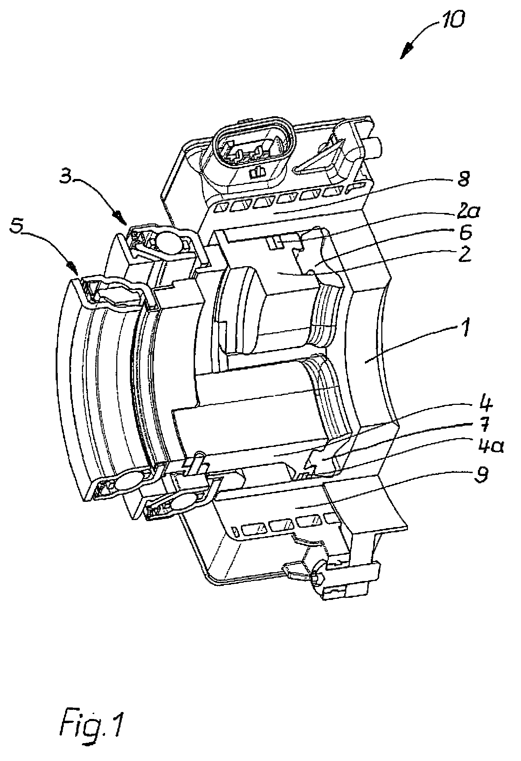

Figur 1 zeigt zum besseren Verständnis einen Ausrücker 10 für eine nicht dargestellte Doppelkupplung im Schnitt in einer perspektivischen Darstellung. Dieser Ausrücker 10 weist ein Gehäuse 1 auf, in dem auf einem Teilkreisdurchmesser jeweils zwei Aussparungen vorgesehen sind, in die jeweils eine aus zwei Kolben 2 und 4 bestehende Gruppe eingesetzt und entlang der Innenwände des Gehäuses 1 geführt werden. Zur Einsparung von Bauraum sind die Kolben 2, 4 und somit auch die Aussparungen im Gehäuse 1, zu deren Aufnahme und Führung nierenförmig ausgeführt. In diesem Schnitt ist aus jeder Kolbengruppe ein Kolben 2, 4 sichtbar, die jeweils endseitig mit einem Ausrücklager 3, 5 wirkverbunden sind. Weiter sind die Kolben 2, 4 endseitig mit jeweils einem Dichtelement 6, 7 versehen. Zwischen dem jeweiligen Kolben 2, 4 und dem Gehäuse 1 ist in axialer Richtung bekanntermaßen jeweils ein Raum vorgesehen, der als Druckraum fungiert. In die äußere Mantelfläche zumindest einer der Kolben 2, 4 jeder Gruppe ist ein Markierungselement in Form beispielsweise eines Magneten 2a, 4a eingebracht, das mit einem außerhalb des Gehäuses 1 im Bereich der Mantelfläche des entsprechenden Kolbens 2, 4 angeordneten Sensors 8, 9 in Wirkverbindung steht.

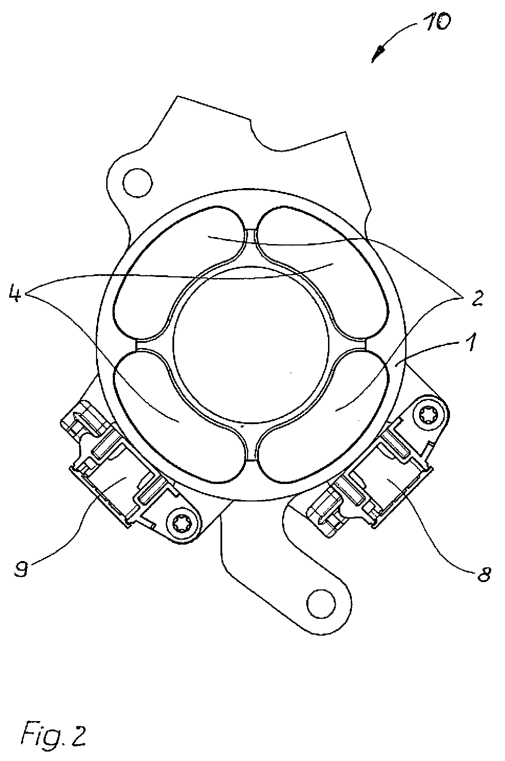

Figur 2 zeigt eine Draufsicht auf den Ausrücker 10, wobei durch Verzicht auf die beiden Ausrücklager gemäß Figur 1, die vorzugsweise auf dem gleichen Teilkreisdurchmesser angeordneten nierenförmigen Kolbengruppen mit den Kolben 2, 4 im Gehäuse 1 sichtbar sind. Aus dieser Darstellung geht weiter hervor, dass ein Kolben 2 der entsprechenden Kolbengruppe mit dem Sensor 8 und ein Kolben 4 der anderen Kolbengruppe mit dem Sensor 9 in Wirkverbindung steht, wobei die zu einer Gruppe gehörenden Kolben im Gehäuse gegenüber liegend angeordnet sind.

### Bezugszeichenliste

- 1: Gehäuse
- 2: Kolben
- 2a: Magnet
- 3: Ausrücklager
- 4: Kolben
- 4a: Magnet
- 5: Ausrücklager
- 6: Dichtelement
- 7: Dichtelement
- 8: Sensor
- 9: Sensor
- 10: Ausrücker

## Patentansprüche

1. Ausrücker (10) für eine Doppelkupplung mit Wegsensierung mit einem konzentrisch zu einer Getriebeeingangswelle angeordneten Gehäuse (1), in dem mindestens ein einem Teilausrücksystem zugeordneter axial bewegbarer Kolben (2, 4) geführt wird, der mit einer Teilkupplung der Doppelkupplung in Wirkverbindung bringbar ist, wobei diese Kolben (2, 4) radial beabstandet zur Achse der Getriebeeingangswelle auf dem gleichen Teilkreisdurchmesser liegen, **dadurch gekennzeichnet, dass** die Kolben einem auf der Mantelfläche des Gehäuses (1) angeordneten Sensor (8, 9) zugeordnet sind, dass die Kolben (2, 4) im Querschnitt eine an das ringförmige Gehäuse (1) angepasste Form aufweisen, und dass der Querschnitt der Kolben (2, 4) nierenförmig ausgebildet ist.

2. Ausrücker (10) nach Anspruch 1, **dadurch gekennzeichnet, dass** mindestens zwei gleich gestaltete Kolben (2, 4) mit gleicher Druckfläche eine Gruppe bilden.

3. Ausrücker (10) nach Anspruch 1 und 2, **dadurch gekennzeichnet, dass** jeweils ein Kolben (2, 4) einer Gruppe mit einem Magneten (2a, 4a) versehen ist

4. Ausrücker (10) nach Anspruch 3, **dadurch gekennzeichnet, dass** jeweils ein Kolben (2, 4) einer Gruppe einen magnetisierbaren Bereich aufweist.

5. Ausrücker (10) nach einem der Ansprüche 1 bis 4, **dadurch gekennzeichnet, dass** jeweils der einen Magneten aufweisende Kolben (2, 4) einer Gruppe mit einem Sensor (8, 9) in Wirkverbindung steht.

6. Ausrücker (10) nach einem der Ansprüche 2 bis 4, **dadurch gekennzeichnet, dass** jeweils der einen magnetisierbaren Bereich aufweisende Kolben (2, 4) einer Gruppe mit einem Sensor (8, 9) in Wirkverbindung steht.

7. Ausrücker (10) nach Anspruch 2, **dadurch gekennzeichnet, dass** die Querschnittsfläche der zu einer Gruppe gehörenden Kolben (2, 4) gleich groß ist.

8. Ausrücker (10) nach Anspruch 1 und 2, **dadurch gekennzeichnet, dass** im Gehäuse (1) die zu einer Gruppe gehörenden Kolben (2, 4) gegenüber liegend angeordnet sind.

## Claims

1. Release mechanism (10) for a dual clutch with position sensing with a housing (1) which is arranged concentrically with respect to a transmission input shaft and in which at least one axially movable piston (2, 4) which is assigned to a partial release system and can be operatively connected to a partial clutch of the dual clutch is guided, wherein these pistons (2, 4) lie radially spaced apart with respect to the axis of the transmission input shaft on the same pitch circle diameter, **characterized in that** the pistons are assigned to a sensor (8, 9) which is arranged on the lateral surface of the housing (1), **in that** the pistons (2, 4) have a shape which is adapted in cross section to the annular housing (1), and **in that** the cross section of the pistons (2, 4) is embodied in a kidney shape.

2. Release mechanism (10) according to Claim 1, **characterized in that** at least two pistons (2, 4) which are configured in the same way and have the same pressure surface form a group.

3. Release mechanism (10) according to Claims 1 and 2, **characterized in that** in each case a piston (2,4) of a group is provided with a magnet (2a, 4a).

4. Release mechanism (10) according to Claim 3, **characterized in that** in each case a piston (2, 4) of a group has a magnetizable region.

5. Release mechanism (10) according to one of Claims 1 to 4, **characterized in that** in each case that piston (2, 4) of a group which has a magnet is operatively connected to a sensor (8, 9).

6. Release mechanism (10) according to one of Claims 2 to 4, **characterized in that** in each case that piston (2, 4) of a group which has a magnetizable region is operatively connected to a sensor (8, 9).

7. Release mechanism (10) according to Claim 2, **characterized in that** the cross-sectional area of the pistons (2, 4) which belong to a group is of equal size.

8. Release mechanism (10) according to Claims 1 and 2, **characterized in that** the pistons (2, 4) which belong to a group are arranged opposite one another in the housing (1).

## Revendications

1. Organe de débrayage (10) pour un double embrayage, comportant une détection de course avec un boîtier (1) disposé concentriquement à un arbre d'entrée de transmission, dans lequel est guidé au moins un piston (2, 4) déplaçable axialement et associé à un système de débrayage partiel, lequel piston peut être amené en liaison fonctionnelle avec un embrayage partiel du double embrayage, ces pistons (2, 4) étant situés de manière espacée radialement par rapport à l'axe de l'arbre d'entrée de transmission sur le même diamètre de cercle partiel, **caractérisé en ce que** les pistons sont associés à un capteur (8, 9) disposé sur la surface d'enveloppe du boîtier (1), **en ce que** les pistons (2, 4) présentent, en section transversale, une forme adaptée au boîtier annulaire (1) et **en ce que** la section transversale des pistons (2, 4) est réalisée en forme de haricot.

2. Organe de débrayage (10) selon la revendication 1, **caractérisé en ce qu'**au moins deux pistons de configuration identique (2, 4) forment un groupe avec la même surface de pression.

3. Organe de débrayage (10) selon les revendications 1 et 2, **caractérisé en ce qu'**un piston (2, 4) d'un groupe est à chaque fois pourvu d'un aimant (2a, 4a).

4. Organe de débrayage (10) selon la revendication 3, **caractérisé en ce qu'**un piston (2, 4) d'un groupe présente à chaque fois une région magnétisable.

5. Organe de débrayage (10) selon l'une quelconque des revendications 1 à 4, **caractérisé en ce qu'**un piston (2, 4) d'un groupe présentant un aimant est à chaque fois en liaison fonctionnelle avec un capteur (8, 9).

6. Organe de débrayage (10) selon l'une quelconque des revendications 2 à 4, **caractérisé en ce que** le piston (2, 4) d'un groupe présentant une région magnétisable est à chaque fois en liaison fonctionnelle avec un capteur (8, 9).

7. Organe de débrayage (10) selon la revendication 2, **caractérisé en ce que** la surface en section transversale des pistons (2, 4) appartenant à un groupe est identique.

8. Organe de débrayage (10) selon les revendications 1 et 2, **caractérisé en ce que** dans le boîtier (1), les pistons (2, 4) appartenant à un groupe sont disposés les uns en face des autres.
